# EUROPÄISCHE PATENTANMELDUNG

(11) **EP 0 596 209 A2**
(43) Veröffentlichungstag der Anmeldung: **11.05.1994**
(21) Anmeldenummer: 93113829.1
(22) Anmeldetag: 30.08.1993
(51) Int. Cl.: C08G 18/36, C08G 59/18, C07D 303/42, A61K 47/44

(54) **Vernetzte Ricinusöl-Derivate**

(30) Priorität: 31.10.1992 DE 4236912
(71) Anmelder: HÜLS AKTIENGESELLSCHAFT, D-45764 Marl (DE)
(72) Erfinder: Schröder, Wolfgang, Dr., D-46282 Dorsten (DE); Jenni, Klaus, Dr., D-58454 Witten (DE)

(57) **Zusammenfassung**

Die Erfindung betrifft vernetzte Ricinusöl-Derivate, die als Verdicker bereits bei niedrigen Temperaturen mit flüssigen Ölen farblose und alterungsbeständige Oleogele und dickfließende Öle liefern.

## Beschreibung

Die Erfindung betrifft vernetzte Ricinusöl-Derivate, ihre Herstellung sowie ihre Verwendung als Verdicker.

Gele sind disperse Systeme aus einer Flüssigkeit und einer festen Substanz, die eine gewisse Formbeständigkeit aufweisen. Die Festsubstanz hat die Aufgabe, die Viskosität der flüssigen Phase zu erhöhen. Dazu ist es notwendig, daß die Festsubstanz lyophil und solvatisierbar ist, entweder als Mizelle oder als Makromolekül in der flüssigen Phase löslich oder quellbar ist und die kolloidalen Partikel in der Flüssigkeit ein dreidimensionales Maschenwerk bilden.

Eine Vielzahl von anorganischen und organischen Materialien ist schon verwendet worden, um die Viskosität von organischen Flüssigkeiten zu erhöhen.

Bekannt ist die gelbildende Wirkung von Aerosilen (H. Brünner, Pharm. Ind. 20 (1958), 581). Nach DE 31 06 913 können auch Mischungen aus feinteiligem Siliciumdioxid und feinteiligen Polyolefinfasern mit einer fibrillären Struktur als Verdickungsmittel für organische Flüssigkeiten eingesetzt werden. Diese Gelbildner ergeben zwar ein nahezu farbloses und transparentes Gel, die notwendige Konzentration der Gelbildner ist jedoch recht hoch, und außerdem spürt man die feinen Körner der Kieselsäureaerogele auf der Haut.

Andere bekannte Gelzusammensetzungen enthalten Tonmineralien mit Schichtstruktur, beispielsweise Bentonite oder Montmorillonite der Formel (X,Y)₂₋₃(Si,Al)₄O₁₀(OH)₂Z_{1/3} · nH₂O, wobei X = Al, Fe(3), Mn(3) oder Cr(3), Y = Mg, Fe(2), Mn(2), Ni, Zn oder Li und Z = K, Na oder Ca ist. Solche Silikate zeigen eine starke Hydrophilie und können unter Absorption großer Wassermengen zwischen den Gitterebenen stark quellen oder wäßrige Gele mit hoher Viskosität bilden.

Nach EP 0 204 240 kann man aus solchen hydrophilen Substanzen durch Austausch von Zwischenschicht-Kationen durch quartäre Ammoniumionen gelbildende lipophile Schichtsilikate herstellen. Diese "organisch modifizierten" Schichtsilikate können jedoch oftmals nur bei Anwesenheit eines organischen Lösemittels zu einem Gel verarbeitet werden, was eine wesentliche Einschränkung darstellt. Eine weitere Eigenschaft der bekannten Gelzubereitungen besteht darin, daß diese eine gelbe bis braune oder grüne Farbe besitzen.

Weiterhin sind nach DE 37 32 265 auch Gelbildner aus Aluminium-Magnesium-Hydroxy-Verbindungen mit Schichtstruktur bekannt. Als Beispiel sei das Aluminium-Magnesium-Hydroxy-Stearat der Formel Al₅Mg₁₀(OH)₃₁(C₁₇H₃₅COO)₄ genannt. Bei diesen Gelbildnern setzt jedoch die Gelbildung beispielsweise mit Paraffinöl erst oberhalb 100 °C ein.

Als Oleogelbildner wird außerdem ein gehärtetes Ricinusöl (THIXCIN R der Fa. Kronos Titan) vermarktet. Dieses Produkt hat den Nachteil, daß die Gelherstellung bei 55 ± 1 °C erfolgen muß und daß eine nachträgliche Scherung des Gels bei Raumtemperatur zu einer Rheodestruktion führt.

Als Oleogelbildner können nach EP 0 156 968 auch Umsetzungsprodukte von Fettsäure-polyol-partialestern mit γ-Glycidyl-oxipropyl-trialkoxisilanen eingesetzt werden. Diese Gelbildner vernetzen jedoch nach, so daß das gebildete Gel mit der Zeit körnig wird.

Es war daher die Aufgabe der Erfindung, Verbindungen bereitzustellen, welche die bekannten Oleogelbildner in deren Wirksamkeit übertreffen, die genannten Nachteile nicht zeigen und eine große Anwendungsbreite aufweisen.

Erfindungsgemäß wird die Aufgabe durch vernetzte Ricinusöl-Derivate gelöst.

Dabei handelt es sich vorzugsweise um mit Oligoepoxiden oder Oligoisocyanaten vernetzte Ricinusöl-Derivate, die in einer besonderen Ausführungsform zusätzlich durch Di- oder Polycarbonsäuren vernetzt sein können.

Unter Ricinusöl-Derivaten sind dabei im Sinne der Erfindung Ricinusöl und Ricinolsäure sowie Produkte zu verstehen, die aus diesen Verbindungen herstellbar sind. Dies sind vorzugsweise teil- oder vollgehärtetes Ricinusöl oder auch Umsetzungsprodukte von Ricinolsäure oder 12-Hydroxystearinsäure mit Di- oder Polyolen. Besonders bevorzugt wird vollgehärtetes Ricinusöl eingesetzt.

Die Di- und Polyole können linear oder verzweigt sein. Die Verbindungen können aliphatisch oder aromatisch sein und weitere funktionelle Gruppen besitzen. Beispiele für Diole sind Ethylenglycol oder Polyethylenglycol. Unter Polyolen sind z. B. Glycerin, Diglycerin, Triglycerin, Polyglycerin, Trimethylolpropan oder Pentaerithrol zu verstehen.

Bei den Oligoepoxiden kann es sich um aliphatische oder aromatische, lineare oder verzweigte Verbindungen handeln, die auch weitere funktionelle Gruppen aufweisen können. Die Oligoepoxide enthalten mindestens zwei Epoxid-Gruppen. Als Oligoepoxid können käufliche Epoxide, wie z. B. Ethylenglycol-Diglycidylether, Propylenglycol-Diglycidylether, Neopentylglycol-Diglycidylether, 1,6-Hexandiol-Diglycidylether, Glycerin-Polyglycidylether, Trimethylolpropan-Polyglycidylether, Pentaerythritol-Polyglycidylether oder Sorbitol-Polyglycidylether, eingesetzt werden.

Unter Oligoisocyanaten sind alle aliphatischen oder aromatischen, lineare oder verzweigte, gegebenenfalls weitere funktionelle Gruppen aufweisende Verbindungen zu verstehen, die mindestens zwei Isocyanatgruppen enthalten. Beispiele für diese Verbindungen sind Hexamethylendiisocyanat, Trimethylhexamethylendiisocyanat, Isophorondiisocyanat, Diphenylmethan-4,4'-diisocyanat, Toluol-2,4-diisocyanat oder ein trimerisiertes Isophorondiisocyanat (VESTANAT® T 1890 der Hüls AG).

Als Di- oder Polycarbonsäuren kommen vorzugsweise Di-, Tri-, Tetra-, Penta- oder Hexacarbonsäuren in Frage, die linear oder verzweigt, aliphatisch oder aromatisch sein und weitere funktionelle Gruppen enthalten können. Mögliche Carbonsäuren sind lineare aliphatische Dicarbonsäuren, wie etwa Malonsäure, Bernsteinsäure, Adipinsäure, Korksäure, Azelainsäure, Sebazinsäure oder Dodecandisäure. Neben den linearen Dicarbonsäuren sind aber auch verzweigte oder cyclische oder aromatische Dicarbonsäuren sowie Dicarbonsäure mit weiteren funktionellen Gruppen möglich. Beispiele sind Trimethyladipinsäure, 3-tert.-Butyladipinsäure, Phthalsäure, Terephthalsäure, Dimerfettsäuren, Weinsäure oder Äpfelsäure. Polycarbonsäuren sind z. B. Trimesinsäure, Pyromellithsäure oder Benzolhexacarbonsäure, jedoch können auch diese Polycarbonsäuren weitere funktionelle Gruppen enthalten, wie etwa die Zitronensäure.

Bei der Herstellung der vernetzten Ricinusöl-Derivate werden im allgemeinen nachfolgende Mengenverhältnisse eingestellt:
Für die Umsetzung von Ricinusöl-Derivaten mit Oligoepoxiden liegt das Molverhältnis der Eingangsstoffe meist bei 1 : 0,1 bis 1 : 1,2. Bevorzugt wird ein Molverhältnis von 1 : 0,3 bis 1 : 1,1 eingestellt.

Für die Umsetzung von Ricinusöl-Derivaten mit Oligoisocyanaten liegt das Molverhältnis der Eingangsstoffe üblicherweise bei 1 : 0,1 bis 1 : 1,2. Bevorzugt wird ein Molverhältnis von 1 : 0,2 und 1 : 1,0 eingestellt.

Soll das Ricinusöl-Derivat zunächst mit Di- oder Polycarbonsäuren und dann mit Oligoepoxiden umgesetzt werden, liegt das Molverhältnis Ricinusöl-Derivat : Di- oder Polycarbonsäure bei 1 : 0,05 bis 1 : 0,6 und das Verhältnis Ricinusöl-Derivat : Oligoepoxid bei 1 : 0,1 bis 1 : 1,0.

Wird das Ricinusöl-Derivat zuerst mit Di- oder Polycarbonsäuren und dann mit Oligoisocyanat umgesetzt, liegt das Molverhältnis Ricinusöl-Derivat : Di- oder Polycarbonsäure bei 1 : 0,05 bis 1 : 0,6 und das Verhältnis Ricinusöl-Derivat : Oligoisocyanat bei 1 : 0,1 bis 1 : 1,0.

Die erfindungsgemäßen Verbindungen können auf an sich bekannte Weise gegebenenfalls unter Verwendung von Katalysatoren hergestellt werden.

Als Katalysatoren für die Umsetzung von Ricinusöl-Derivaten mit Oligoepoxiden kommen Metallsalze in Frage. Die Katalysatoren können sowohl in Substanz als auch gelöst in einem Lösemittel zugesetzt werden. Sie können zu Beginn der Reaktion komplett oder über die ganze Reaktionszeit verteilt zugegeben werden. Vorzugsweise werden die Katalysatoren, gelöst in wenig Lösemittel, portionsweise über die ganze Reaktionszeit verteilt zugesetzt. Beispiele für derartige Katalysatoren sind AlCl₃ oder SnCl₄.

Die Reaktion kann sowohl ohne als auch in einem organischen Lösemittel erfolgen, wobei aber bei der Wahl des Lösemittels darauf geachtet werden muß, daß dieses nicht mit dem Oligoepoxid reagiert. Beispiele für Lösemittel sind höhersiedende Dialkylether, wie Ethylbutylether oder Dibutylether, oder cyclische Ether, wie Tetrahydrofuran oder 1,4-Dioxan. Nach Reaktionsende kann das Lösemittel nach üblichen Methoden, wie etwa Vakuumdestillation, wieder entfernt werden.

In einer bevorzugten Ausführungsform wird die Reaktion selbst ohne Lösemittel, der Katalysator jedoch in einem Lösemittel gelöst zugesetzt.

Der Temperaturbereich für die Umsetzung mit den Oligoepoxiden liegt im allgemeinen bei 50 bis 150 °C. Bevorzugt wird eine Temperatur von 80 bis 130 °C eingestellt.

Das Molverhältnis von Epoxidgruppen zu Katalysator beträgt meist 1 : 0,001 bis 1 : 0,2. In einer bevorzugten Ausführungsform liegt das Epoxid-Katalysator-Verhältnis bei 1 : 0,005 bis 1 : 0,05.

Die Reaktionszeit beträgt je nach Ansatzgröße meist 0,5 bis 10 Stunden.

Als Katalysator für die Umsetzung der Ricinusöl-Derivate mit Di- oder Polycarbonsäuren kommen übliche Veresterungskatalysatoren in Frage. Der Katalysator kann sowohl in Substanz als auch gelöst in einem organischen Lösemittel zugesetzt werden. Beispiele für derartige Katalysatoren sind Titanate, wie etwa Tetrabutyltitanat oder Tetrapropyltitanat. Es können aber auch saure Ionenaustauscher verwendet werden, die sich nach Reaktionsende durch übliche Methoden, wie etwa Filtration, wieder entfernen lassen.

Die Reaktion kann sowohl ohne als auch in einem organischen Lösemittel erfolgen. Nach Reaktionsende kann das Lösemittel nach den üblichen Methoden, wie Destillation oder Vakuumdestillation, wieder entfernt werden. Die Reaktion ohne Lösemittel wird bevorzugt.

Der Temperaturbereich für die Umsetzung der Ricinusöl-Derivate mit den Di- oder Polycarbonsäuren liegt bei 50 bis 250 °C. Bevorzugt wird eine Temperatur von 80 bis 240 °C eingestellt.

Die Reaktion kann bei Normaldruck oder vermindertem Druck durchgeführt werden. Bevorzugt wird der Druck während der Reaktion von 1 000 hPa auf 100 hPa gesenkt.

Das Molverhältnis von Säuregruppe zu Katalysator beträgt vorzugsweise 1 : 0,2 bis 1 : 0,0005. In einer bevorzugten Ausführungsform liegt das Säuregruppen-Katalysator-Verhältnis bei 1 : 0,01 bis 1 : 0,001.

Der Katalysator kann zu Beginn der Reaktion komplett oder auch portionsweise über die Reaktionszeit verteilt zugesetzt werden. In einer bevorzugten Ausführungsform wird der Katalysator zu Beginn komplett zugesetzt.

Die Reaktionszeit beträgt je nach Ansatzgröße meist 0,5 bis 10 Stunden.

Die Umsetzung der Ricinusöl-Derivate mit den Oligoisocyanaten kann mit bekannten Katalysatoren durchgeführt werden. In einer bevorzugten Ausführungsform wird die Reaktion ohne Katalysatoren durchgeführt.

Die Reaktion kann sowohl ohne als auch in einem organischen Lösemittel erfolgen. Nach Reaktionsende kann das Lösemittel nach den üblichen Methoden, wie Destillation oder Vakuumdestillation, wieder entfernt werden. In einer bevorzugten Ausführungsform wird die Reaktion ohne Lösemittel durchgeführt.

Der Temperaturbereich für die Umsetzung mit den Oligoisocyanaten liegt bei 50 bis 250 °C. Bevorzugt wird eine Temperatur von 80 bis 200 °C eingestellt. In einer besonders bevorzugten Ausführungsform wird die Temperatur während der Reaktion gesteigert.

Die erfindungsgemäßen Verbindungen eignen sich als Emulgatoren und Verdicker, wobei sie im besonderen zur Herstellung von Oleogelen und dickfließenden Ölen aus flüssigen Ölen verwendet werden können.

Als Öle, die durch die erfindungsgemäßen Verbindungen vergelt werden können, kommen flüssige synthetische und natürliche Öle, wie z. B. Paraffinöl, MCT-Öle, Propylenglycolcaprylat/caprinat, Oleylerucat, Decyloleat, IPM, IPP, Sesamöl, Erdnußöl, Avocadoöl, Mandelöl, Sonnenblumenöl, Weizenkeimöl und Jojobaöl, in Betracht.

Die zur Vergelung der genannten Öle notwendige Einsatzmenge der erfindungsgemäßen Verbindungen ist abhängig von der Polarität der eingesetzten Öle sowie von dem Vernetzungsgrad der erfindungsgemäßen Verbindungen. Je schwächer die Polarität der Öle und je geringer der Vernetzungsgrad der erfindungsgemäßen Verbindungen, desto höher ist die erforderliche Einsatzmenge der erfindungsgemäßen Verbindungen. Bezogen auf das zu vergelende Öl werden im allgemeinen 0,1 bis 30 Gewichtsprozent, vorzugsweise 2 bis 15 Gewichtsprozent, vernetzte Ricinusöl-Derivate zugesetzt.

Um beim Prozeß der Gelherstellung eine gleichmäßige Verteilung der erfindungsgemäßen Verbindungen in der Ölphase zu erzielen, werden diese vor dem Eintrag in die Ölphase vorzugsweise auf eine Korngröße < 500 µm vermahlen.

Die vernetzten Ricinusöl-Derivate sind als Dispergatoren, rheologische Additive oder zur Herstellung derartiger Produkte sehr gut verwendbar. Die vernetzten Ricinusöl-Derivate sind bereits bei 30 °C verarbeitbar und liefern farblose, alterungsbeständige und bis 60 °C temperaturstabile Gele und dickfließende Öle. Die Verbindungen haben zusätzlich den Vorteil, daß sie überwiegend aus nachwachsenden Rohstoffen hergestellt werden.

Bei der praktischen Durchführung der Gelherstellung werden die erfindungsgemäßen Produkte bei Temperaturen von 30 bis 100 °C, vorzugsweise von 40 bis 60 °C, über einen Zeitraum von 2 bis 20 Minuten, vorzugsweise von 8 bis 12 Minuten, mit dem zu vergelenden Öl geschert, was in einem Ultra-Turrax erfolgen kann. Die Umdrehungsgeschwindigkeit des Homogenisators kann dabei 1 000 bis 25 000 Upm betragen.

Bei solchen erfindungsgemäßen Verbindungen, die sich aufgrund ihrer Plastizität nicht vermahlen lassen, ist ein vorheriges Aufschmelzen und ein Eintrag der so erhaltenen heißen Flüssigkeiten in die bei der Bildungstemperatur des Oleogels thermostatisierte Ölphase erforderlich.

Bei Verwendung der Verdicker als Oleogelbildner erhält man bei einer zu hohen Temperatur zum Teil nur dickfließende Öle, bei einer zu niedrigen Temperatur löst sich der Oleogelbildner nicht in allen Fällen homogen in der Ölphase, so daß beim Einreiben des fertigen Gels in die Haut noch Oleogelbildnerpartikel spürbar sind.

Bei einigen Oleogelen, insbesondere bei solchen, die bei niederen Temperaturen erhalten werden, findet man überraschenderweise, daß eine nachträgliche Wärmebehandlung die Gele verfestigt. Die Wärmebehandlung kann beispielsweise so durchgeführt werden, daß die Oleogele 3 Stunden lang knapp unter ihrer Verflüssigungstemperatur im Wärmeschrank oder im Thermostaten gelagert werden.

Ähnlich wie die Oleogele können mit Hilfe der erfindungsgemäßen Verdicker auch dickfließende Öle, die im allgemeinen eine Viskosität von 1 000 bis 25 000 mPa s aufweisen, hergestellt werden. Dabei sollte die Menge an Verdicker, mit der gerade noch ein Oleogel erhalten wird, um mindestens 2 % unterschritten oder die Temperatur, bei der sich gerade noch ein Oleogel bildet, um mindestens 10 °C überschritten werden.

Die folgenden Beispiele zeigen, daß bei Einsatz eines relativ stark vernetzten Ricinusöl-Derivats, einem Umsetzungsprodukt von gehärtetem Ricinusöl mit Sorbitol-Polyglycidylether, bereits ein Gehalt von 6 % ausreicht, um ein festes Gel zu erzeugen.

Bei schwächer vernetzten Produkten müssen jedoch mindestens 8, besser aber 10 % des Verdickers eingesetzt werden. Bei Konzentrationen von 10 % und mehr können mit einige Verdickertypen auch bei Herstelltemperaturen ab 20 °C stabile Oleogele erhalten werden, vorausgesetzt, der Verdicker löst sich bei der Temperatur im Öl.

### Beispiel 1

100 g gehärtetes Ricinusöl werden mit 11,1 g Ethylenglycol-Diglycidylether 8 Stunden bei 120 °C gerührt, wobei alle 2 Stunden 0,5 g AlCl₃, gelöst in 1,67 g Ethylbutylether, zugegeben werden. Die Umsetzung ist vollständig. Der Epoxidgehalt liegt unterhalb der Nachweisgrenze von 0,01 %.

### Beispiel 2

900 g gehärtetes Ricinusöl werden mit 166,9 g Ethylenglycol-Diglycidylether 8 Stunden bei 120 °C gerührt, wobei alle 2 Stunden 4,5 g AlCl₃, gelöst in 15 g Ethylbutylether, zugegeben werden. Zur Entfernung des Ethylbutylethers wird das Reaktionsgemisch anschließend 2 Stunden bei 150 °C und 500 hPa gerührt. Die Umsetzung verläuft vollständig. Der Epoxidgehalt liegt unterhalb der Nachweisgrenze von 0,01 %.

### Beispiel 3

650 g gehärtetes Ricinusöl werden mit 59,9 g Neopentylglycol-Diglycidylether 8 Stunden bei 130 °C gerührt, wobei alle 2 Stunden 3,25 g AlCl₃, gelöst in 11 g Ethylbutylether, zugegeben werden. Zur Entfernung des Ethylbutylethers wird das Reaktionsgemisch anschließend 2 Stunden bei 150 °C und 500 hPa gerührt.

### Beispiel 4

650 g gehärtetes Ricinusöl werden mit 63,7 g 1,6-Hexandiol-Diglycidylether 8 Stunden bei 120 °C gerührt, wobei alle 2 Stunden 3,25 g AlCl₃, gelöst in 11 g Ethylbutylether, zugegeben werden. Zur Entfernung des Ethylbutylethers wird das Reaktionsgemisch anschließend 2 Stunden bei 150 °C und 500 hPa gerührt.

### Beispiel 5

650 g gehärtetes Ricinusöl werden mit 281,2 g Sorbitol-Polyglycidylether 8 Stunden bei 120 °C gerührt, wobei alle 2 Stunden 3,25 g AlCl₃, gelöst in 11 g Ethylbutylether, zugegeben werden. Zur Entfernung des Ethylbutylethers wird das Reaktionsgemisch anschließend 2 Stunden bei 150 °C und 500 hPa gerührt.

### Beispiel 6

Zu 100,6 g gehärtetem Ricinusöl werden bei 90 °C innerhalb weniger Minuten 5,4 g Hexamethylendiisocyanat zugegeben. Das Reaktionsgemisch wird noch 2 Stunden bei 100 °C gerührt. Der Umsatz ist vollständig. Laut Infrarot-Spektroskopie kann keine freie Isocyanat-Gruppe mehr festgestellt werden (Nachweisgrenze: 0,005 %).

### Beispiel 7

Zu 100,6 g gehärtetem Ricinusöl werden bei 90 °C innerhalb weniger Minuten 14,27 g Isophorondiisocyanat zugegeben. Das Reaktionsgemisch wird noch 2 Stunden bei 100 °C und anschließend 2 Stunden bei 150 °C gerührt. Der Umsatz ist vollständig. Laut Infrarot-Spektroskopie kann keine freie Isocyanat-Gruppe mehr festgestellt werden.

### Beispiel 8

Zu 100,6 g gehärtetem Ricinusöl werden bei 100 °C innerhalb weniger Minuten 6,75 g Trimethylhexamethylendiisocyanat zugegeben. Das Reaktionsgemisch wird noch 2 Stunden bei 100 °C und anschließend 2 Stunden bei 200 °C gerührt.

### Beispiel 9

100 g Ethylenglykol-bis-(12-hydroxystearat), hergestellt aus Ethylenglykol und 12-Hydroxystearinsäure, werden mit 27,8 g Ethylenglykol-Diglycidylether 8 Stunden bei 120 °C gerührt, wobei alle 2 Stunden 0,5 g AlCl₃, gelöst in 1,67 g Ethylbutylether, zugegeben werden. Zur Entfernung des Ethers wird das Reaktionsgemisch anschließend 2 Stunden bei 150 °C und 500 hPa gerührt.

### Beispiel 10

100 g Trimethylolpropan-tris-(12-hydroxystearat), hergestellt aus Trimethylolpropan und 12-Hydroxystearinsäure, werden mit 23,0 g Hexandiol-Diglycidylether 8 Stunden bei 120 °C gerührt, wobei alle 2 Stunden 0,5 g AlCl₃, gelöst in 1,8 g Ethylbutylether, zugegeben werden. Zur Entfernung des Ethylbutylethers wird das Reaktionsgemisch anschließend 2 Stunden bei 150 °C und 500 hPa gerührt.

### Beispiel 11

100 g Pentaerythrit-tetrakis-(12-hydroxystearat), hergestellt aus Pentaerythrit und 12-Hydroxystearinsäure, werden mit 9,8 g Neopentylglykol-Diglycidylether 4 Stunden bei 130 °C gerührt, wobei jede Stsunde 0,5 g AlCl₃, gelöst in 1,6 g Ethylbutylether, zugegeben werden. Zur Entfernung des Ethylbutylethers wird das Reaktionsgemisch anschließend 2 Stunden bei 150 °C und 300 hPa gerührt.

### Beispiel A 1

200 mg mittelkettiges Triglycerid (MIGLYOL 812 der Hüls AG) werden in einem Becherglas auf 60 °C temperiert. 12 mg mit Sorbitol-Polyglycidylether vernetztes gehärtetes Ricinusöl (Molverhältnis 0,6 : 1), das vorher in einer Mikromühle auf eine Korngröße < 500 µm vermahlen wird, werden zugegeben und 10 Minuten mit dem Ultra-Turrax bei 24 000 Upm geschert. Dann wird abgekühlt und die Mikropenetration nach Klein gemessen.

### Beispiele A 2 bis A 4

Es wird wie in Beispiel A 1 verfahren. Man setzt jedoch 16 bzw. 20 bzw. 24 mg mit Sorbitol-Polyglycidylether vernetztes gehärtetes Ricinusöl zu.

### Beispiel B 1

200 mg Oleylerucat (DYNACERIN 660 der Hüls AG) werden in einem Becherglas auf 40 °C temperiert. 24 mg mit Sorbitol-Polyglycidylether vernetztes gehärtetes Ricinusöl (Molverhältnis 1 : 1), das vorher in einer Mikromühle < 500 µm vermahlen wird, werden zugegeben und 10 Minuten mit dem Ultra-Turrax bei 24 000 Upm geschert. Dann wird abgekühlt und die Mikropenetration nach Klein gemessen.

### Beispiele B 2 bis B 4

Es wird wie in Beispiel B 1 verfahren. Die Umsetzung erfolgt jedoch bei 50 bzw. 60 bzw. 70 °C.

### Beispiel C 1

200 mg Paraffinöl werden in einem Becherglas auf 30 °C temperiert. 24 mg mit Ethylenglycol-Diglycidylether vernetztes gehärtetes Ricinusöl (Molverhältnis 1 : 1), das vorher in einer Mikromühle < 500 µm vermahlen wird, werden zugegeben und 10 Minuten mit dem Ultra-Turrax bei 24 000 Upm geschert. Dann wird abgekühlt und die Mikropenetration nach Klein gemessen.

### Beispiele C 2 bis C 4

Es wird wie in Beispiel C 1 verfahren. Die Oleogele werden jedoch bei 40 bzw. 50 bzw. 60 °C hergestellt.

### Beispiel D 1

200 mg mittelkettiges Triglycerid (MIGLYOL 812) werden in einem Becherglas auf 50 °C temperiert. 24 mg mit 1,6-Hexandiol-Diglycidylether vernetztes gehärtetes Ricinusöl (Molverhältnis 1 : 1) wird bei ca. 140 °C aufgeschmolzen, heiß in das erwärmte Öl gegeben, worauf die Mischung 10 Minuten mit dem Ultra-Turrax bei 24 000 Upm geschert wird. Dann wird abgekühlt und die Mikropenetration nach Klein gemessen.

### Beispiele D 2 bis D 5

Das in Beispiel D 1 erhaltene Oleogel wird 3 Stunden bei 30 bzw. 40 bzw. 50 bzw. 60 °C gelagert. Nach Abkühlung wird die Mikropenetration erneut gemessen. Es wird keine Änderung festgestellt.

### Beispiel E 1

200 mg mittelkettiges Triglycerid (MIGLYOL 812) werden in einem Becherglas auf 30 °C temperiert. 24 mg mit Ethylenglycol-Diglycidylether vernetztes gehärtetes Ricinusöl (Molverhältnis 1 : 1) wird bei ca. 140 °C aufgeschmolzen, heiß in das erwärmte Öl gegeben, worauf die Mischung 10 Minuten mit dem Ultra-Turrax bei 24 000 Upm geschert wird. Dann wird abgekühlt und die Mikropenetration nach Klein gemessen.

### Beispiele E 2 bis E 5

Das in Beispiel E 1 erhaltene Oleogel wird 3 Stunden bei 30 bzw. 40 bzw. 50 bzw. 60 °C gelagert. Nach Abkühlung wird die Mikropenetration erneut gemessen. Die Gelfestigkeit verbessert sich linear mit zunehmender Temperatur, bei der gelagert wurde (siehe Tabelle 1). Bei 70 °C schmilzt das Gel.

**Tabelle 1**

| Mikropenetrationswerte nach Klein verschiedener beispielhafter Oleogele | | | | | |
|---|---|---|---|---|---|
| Beispiel | 1 | 2 | 3 | 4 | 5 |
| A | 242 | 209 | 180 | 162 | - |
| B | 411 | 489 | 710 | 909 | - |
| C | 1 512 | 396 | 402 | 348 | - |
| D | 453 | 420 | 495 | 405 | 471 |
| E | 540 | 423 | 393 | 306 | 241 |

## Patentansprüche

1. Vernetzte Ricinusöl-Derivate.

2. Verbindungen nach Anspruch 1,
dadurch gekennzeichnet,
daß die Ricinusöl-Derivate durch Oligoepoxide vernetzt sind.

3. Verbindungen nach Anspruch 1,
dadurch gekennzeichnet,
daß die Ricinusöl-Derivate durch Oligoisocyanate vernetzt sind.

4. Verbindungen nach Anspruch 2,
dadurch gekennzeichnet,
daß es sich bei den Oligoepoxiden um aliphatische oder aromatische, lineare oder verzweigte, weitere funktionelle Gruppen besitzen könnende und mindestens zwei Epoxid-Gruppen besitzende Verbindungen handelt.

5. Verbindungen nach Anspruch 3,
dadurch gekennzeichnet,
daß es sich bei den Oligoisocyanaten um aliphatische oder aromatische, lineare oder verzweigte, weitere funktionelle Gruppen besitzen könnende und mindestens zwei Isocyanat-Gruppen besitzende Verbindungen handelt.

6. Verbindungen nach den Ansprüchen 2 und 3,
dadurch gekennzeichnet,
daß die Ricinusöl-Derivate zusätzlich durch Di- oder Polycarbonsäuren vernetzt sind.

7. Verbindungen nach Anspruch 6,
dadurch gekennzeichnet,
daß es sich bei Dicarbonsäuren um lineare oder verzweigte, aliphatische oder aromatische, weitere funktionelle Gruppen besitzen könnende Dicarbonsäuren handelt.

8. Verbindungen nach Anspruch 6,
dadurch gekennzeichnet,
daß es sich bei den Polycarbonsäuren um lineare oder verzweigte, aliphatische oder aromatische, weitere funktionelle Gruppen besitzen könnende, mehr als zwei Carbonsäuregruppen tragende Verbindungen handelt.

9. Verbindungen nach Anspruch 1,
dadurch gekennzeichnet,
daß es sich bei den Ricinusöl-Derivaten um vernetztes teil- oder vollgehärtetes Ricinusöl handelt.

10. Verbindungen nach Anspruch 1,
dadurch gekennzeichnet,
daß es sich bei den Ricinusöl-Derivaten um Umsetzungsprodukte von Ricinolsäure oder 12-Hydroxystearinsäure mit Di- oder Polyolen handelt.

11. Verbindungen nach Anspruch 10,
dadurch gekennzeichnet,
daß es sich bei Diolen um lineare oder verzweigte, aliphatische oder aromatische, weitere funktionelle Gruppen besitzen könnende Diole handelt.

12. Verbindungen nach Anspruch 10,
dadurch gekennzeichnet,
daß es sich bei Polyolen um lineare oder verzweigte, aliphatische oder aromatische, weitere funktionelle Gruppen besitzen könnende Polyole handelt.

13. Verfahren zur Herstellung von Verbindungen nach den Ansprüchen 1 bis 3,
dadurch gekennzeichnet,
daß man Ricinusöl-Derivate mit Oligoepoxiden oder Oligoisocyanaten vernetzt.

14. Verfahren nach Anspruch 13,
dadurch gekennzeichnet,
daß man Ricinusöl-Derivate zunächst mit Di- oder Polycarbonsäuren und dann mit Oligoepoxiden oder Oligoisocyanaten vernetzt.

15. Verwendung der Verbindungen nach Anspruch 1 als Verdicker.

16. Verwendung nach Anspruch 15,
dadurch gekennzeichnet,
daß man Ölen, bezogen auf diese Öle, 0,1 bis 30 Gewichtsprozent vernetzte Ricinusöl-Derivate zusetzt.

17. Verwendung nach Anspruch 15 als Verdicker für Oleogele.

18. Verwendung nach Anspruch 15 als Verdicker für dickfließende Öle.

19. Verwendung nach Anspruch 18,
dadurch gekennzeichnet,
daß die Einsatzmenge des Verdickers gegenüber der Menge, welche gerade noch ein Oleogel ergibt, um mindestens 2 % unterschritten wird.

20. Verwendung nach Anspruch 18,
dadurch gekennzeichnet,
daß die Temperatur bei der Herstellung der dickfließenden Öle gegenüber der Temperatur, welche gerade noch ein Oleogel ergibt, um mindestens 10 °C überschritten wird.
